# EUROPEAN PATENT SPECIFICATION

(11) **EP 0 543 352 B1**
(45) Date of publication and mention of the grant of the patent: **27.03.1996**
(21) Application number: 92119644.0
(22) Date of filing: 17.11.1992
(51) Int. Cl.: H02B 11/173

(54) **Switchboard**
Schaltfeld
Tableau de commutations

(30) Priority: 18.11.1991 JP 301513/91; 14.02.1992 JP 28392/92; 14.02.1992 JP 28393/92; 08.05.1992 JP 115774/92
(43) Date of publication of application: 26.05.1993
(73) Proprietor: HITACHI, LTD., Chiyoda-ku, Tokyo 101 (JP)
(72) Inventor: Tanimizu, Toru, Hitachi-shi, Ibaraki 319-12 (JP); Takematsu, Koutarou, Hitachi-shi, Ibaraki 316 (JP); Gotoh, Yoshitomo, Hitachi-shi, Ibaraki 316 (JP); Tsubaki, Toru, Hitachi-shi, Ibaraki 316 (JP); Wakasa, Fumio, Kitaibaraki-shi, Ibaraki 319-15 (JP); Izumi, Toshiaki, Hitachi-shi, Ibaraki 316 (JP); Kajiwara, Satoru, Hitachi-shi, Ibaraki 316 (JP)
(74) Representative: Strehl Schübel-Hopf Groening & Partner

(56) References cited:
- BE-A- 497 064
- CH-A- 459 328
- DE-A- 3 223 934
- DE-C- 963 079
- US-A- 3 193 633

## Description

### Field of the Invention

The present invention relates to a switchboard according to the preamble of claim 1 which accomodates electrical equipments such as circuit breakers, bus bars and cable heads therein and supplies electric power from the bus bars to a load via the circuit breakers and the cable heads.

### Conventional Art

A switch board comprising the features of the preamble of claim 1 is disclosed in DE-A-3223934.

In a conventional switchboard such as disclosed in JP-A-61-121704 (1986), the switchboard is assembled in a workshop in such a manner that a partition plate is at first installed in a switchboard casing, a disconnecting switch unit for the power source side and a disconnecting switch unit for the load side are respectively connected to the partition plate, a circuit breaker is connected between these disconnecting switch units and bus bars for the power source side and load cables are respectively connected to the disconnecting switch unit for the power source side and to the disconnecting switch unit for the load side in the depth side of the switchboard casing. When assembling these components, it rarely happens that all of the components such as the disconnecting switching units, the circuit breakers and the bus bars for the power source side are ready before assembling thereof so that they can be assembled into the switchboard casing at the same time. However, electrical components which are ready for assembling such as the bus bars and the circuit breakers are usually assembled into the switchboard casing at first and the remaining electrical components are afterwards assembled into the switchboard casing to complete the switchboard, after they are ready for assembling.

As a result, the delivery timing of the switchboard to a customer is delayed. Furthermore, when one of the switchboard units arranged in an array constituting the switchboard is required to be exchanged due to failure thereof, all of the switchboard units have to be exchanged so that there are such problems that a large number of work hours are necessary for the exchange and the re-assembly thereof.

Further, in a conventional switchboard, such as disclosed in JP-A-60-234404 (1985), the entire electrical equipments such as a plurality of circuit breakers, bus bars and cable heads are accommodated in one casing. Therefore, when a part of the electrical equipments is required to be modified, the entire constitution thereof has to be reexamined and modified. For example, when it is required to increase the current conducting capacity of the circuit breakers because of an increase of load demand, the arrangement of all of the electrical equipments in the switchboard has to be reexamined and in some occasions it happens that a part of the electrical equipments can not be accommodated in the same switchboard casing. Moreover, such modification can only be performed after interrupting the current supply to the bus bars and to all of the electrical equipments connected to the bus bars.

Still further, a switchboard is in many instances installed inside a building. However, because of recent sharp rise of land price, a small-sized switchboard which requires less space is earnestly demanded.

With regard to the size reduction of the switchboard, size reduction of the respective electrical equipments in the switchboard has been contemplated. For example, a vacuum circuit breaker has been employed as the circuit breaker, while the size of the entire switchboard is still large. More specifically, the size of the most popular switchboard is 2.3m high, 1.9m deep and 0.7m wide, in which circuit breakers, bus bars and cable heads for two sets of three phase circuit components are accommodated. The size of the conventional switchboard is large, and the reason therefor, for example in case of the switchboard disclosed in the above JP-A-60-234404 (1985), that the circuit breakers, the bus bars and the cable heads disposed therein are connected via connecting conductors. Further, in such a conventional switchboard insufficient consideration is given to the suppression of heat generation due to a large current flowing during normal operation and in case of an accident, and to the smooth dissipation of the generated heat.

Moreover, in a conventional switchboard such as disclosed in JP-A-60-261309 (1985), the circuit breakers are moved in the switchboard in order to connect or disconnect to the disconnecting switch units therein. When moving the circuit breakers in the switchboard, these move along a guide rail provided on the floor of the switchboard. Further, when it is required to draw the circuit breakers out of the switchboard, the circuit breakers are placed on a carriage and moved because no guide rail is provided to move the circuit breakers to the outside. In a case of two tiered switchboard the circuit breakers in the upper switchboard casing are moved by making use of a lifter.

However, the provision of such devices as the carriage and the lifter is troublesome and the maintenance and inspection work of the switchboard using the same is increased. A further conventional switchboard is shown in US-A-3 193 633.

### Summary of the Invention

An object of the present invention is to provide an switchboard of which work hours for assembling and exchanging thereof are significantly reduced.

Another object of the present invention is to provide a switchboard having application freedom with respect to such aspects as planning and modification thereof.

A further object of the present invention is to provide a small sized switchboard by improving the connection between the electrical equipments in the switchboard and the arrangement thereof.

Still another object of the present invention is to provide a switchboard in which the circuit breakers can easily be drawn out from the switchboard to thereby facilitate the maintenance and inspection work thereof. These objects are met by the invention as set out in claim 1.

The problems of the conventional switchboard that the freedom in application with respect to such as planning and modification thereof is low are caused by the fact that all of the electrical equipments such as a plurality of circuit breakers, bus bars and cable heads are accommodated in a single casing. In the present invention, the respective electrical equipments are accommodated in the separate compartments, the bus bars are disposed in the common unit and the separate compartments and the common unit are attached in such a manner to permit detachment, thereby modification of the individual electrical equipments affects no influence to the other remaining electrical equipments and the bus bars.

According to the present invention, since a first plane defined by the array of the circuit breakers in the height direction of the switchboard is arranged to cross perpendicularly to a second plane defined by the bus bars, the width of the switchboard in particular is reduced.

Further, according to the present invention, the bus bars are formed in double bus bars and the double bus bars are connected at appropriate positions via the connecting conductors to branch the current flowing therethrough, thereby the heat generation due to a large current during a normal operation and in an accident is suppressed and a smooth heat dissipation is effected.

The switchboard according to still further aspect of the present invention comprises a stationary rail attached on an inner face of the switchboard, a first moving rail moving on the stationary rail, a supporting plate attached to the first moving rail and having a swingable door, a second moving rail attached to the supporting plate and a third moving rail moving on the second rail and carrying the electrical equipments.

Since the door moves together with the first moving rail and the supporting plate and from the moved position of the supporting plate the second moving rail and the electrical equipments such as circuit breakers move, and the circuit breakers are drawn out outside the switchboard, thereby the maintenance and inspection work thereof are facilitated.

Brief Explanation of the Drawings
Fig.1 is a perspective view of a two tiered switchboard according to the present invention ;
Fig.2 is an electrical circuit diagram of the two tiered switchboard shown in Fig.1 ;
Fig.3 is a perspective view of upper and lower side switchboard units and respective bus bar units attached thereto included in the switchboard shown in Fig.1 and illustrating the internal structure thereof ;
Fig.4 is a perspective view of the lower side switchboard unit and the bus bar unit attached thereto illustrating the internal structure thereof when the door of the switchboard unit is opened and the vacuum circuit breakers therein are drawn out ;
Fig.5 is a cross section view taken along the line A-A in Fig.1 and illustrating the bus bar unit ;
Fig.6 is a perspective view of the bus bar unit shown in Fig.5 ;
Fig.7 is a front view of the bus bar unit shown in Fig.6 ;
Fig.8 is a cross sectional view of the bus bar unit taken along the line B-B in Fig.7 ;
Fig.9 is a cross sectional view taken along the line A-A in Fig.1 and illustrating both the bus bar unit and the switchboard unit ;
Fig.10 is a cross sectional view shown in Fig.9 but excluding the insulated conductor 50 and the load side cables 61 therein ;
Fig.11 is a perspective view of the vacuum circuit breaker unit included in the switchboard unit shown in Fig.10 ;
Fig.12 is a perspective view showing the connection between the vacuum circuit breaker unit in the switchboard unit and the double bus bars in the bus bar unit shown in Fig.10 ;
Fig.13 is a perspective view for explaining the connection between the vacuum circuit breaker unit and the insulated conductor 50 in the switchboard unit shown in Fig.9 ;
Fig.14 is a perspective view for explaining the connection between the vacuum circuit breaker unit and a modified insulated conductor 50a to be incorporated in the switchboard unit ;
Fig.15 is a cross sectional view of the switchboard unit and the bus bar unit taken along the line D-D in Fig.9 ;
Fig.16 is a cross sectional view of the switchboard unit taken along the line E-E in Fig.9 ;
Fig.17 is an enlarged view illustrating the connection between the circuit breaker unit and the insulated conductor 50 shown in Fig.9 ;
Fig.18 is a cross sectional view similar to that shown in Fig.10 when the door of the switchboard unit is opened ;
Fig.19 is a cross sectional view similar to that shown in Fig.10 when the vacuum circuit breaker unit is disconnected from the bus bars ;
Fig.20 is a cross sectional view similar to that shown in Fig.10 when the vacuum circuit breaker unit is drawn out outside the switchboard unit ;
Fig.21 is a schematic plan view of the switchboard unit when looked at from the top of Fig.10 ;
Fig.22 is a schematic partial front view of the switchboard unit shown in Fig.21 ;
Fig.23 is an enlarged plan view of a first guide rail 110 shown in Fig.21 ;
Fig.24 is an enlarged plan view of the first guide rail 110 shown in Fig.23 when the first guide rail 110 is extended ;
Fig.25 is an enlarged plan view of a second guide rail 120 shown in Fig.21 when the second guide rail 120 is extended ;
Fig.26 is a schematic plan view of the switchboard unit when looked at from the top of Fig.18 ;
Fig. 27 is a schematic plan view of the switchboard unit when looked at from the top of Fig.19 ;
Fig.28 is a schematic plan view of the switchboard unit when looked at from the top of Fig.20 ; and
Fig.29 is a schematic partial plan view of the switchboard unit including a modified first and second guide rails.

### Detailed Explanation of the Embodiments

Hereinbelow, embodiments of the present invention are explained with reference to the drawings, wherein the same numerals designate the same or equivalent elements throughout the specification.

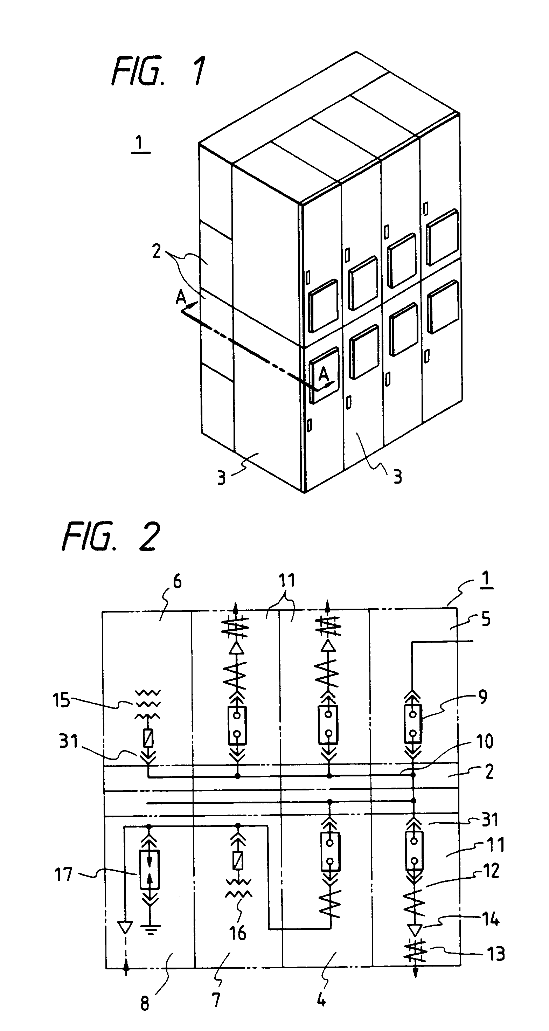

Fig.1 illustrates an overall perspective view of a two tiered switchboard as an example of the present invention. A switchboard 1 is constituted by two bus bar units 2 in up and down location and a plurality of arrayed switchboard units 3 in up and down two tiers (in the drawing eight boards). The bus bar unit 2 and the switchboard unit 3 are attached to each other in such a manner to permit detachment thereof, which is one of important features of the present invention. In the explanation hereinbelow, an example wherein the bus bar unit 2 is fixed, for example, on a wall face of a building and the switchboard units 3 are detachably mounted thereto is explained, However, the switchboard may alternatively be constituted to have the switchboard units fixed and the bus bar unit detachably mounted thereto.

Fig.2 illustrates an example of a system circuit diagram of the switchboard shown in Fig.1. The respective switchboard units 3 of the switchboard 1 constitute devices such as load units 11, a power receiving unit 4, a bus bar connecting unit 5, a grounding instrument use transformer unit 6, an instrument use transformer unit 7, and a lightning arrester unit 8. In the drawing, numeral 9 depicts a circuit breaker, numeral 15 depicts a grounding instrument use transformer, numeral 16 depicts an instrument use transformer and numeral 17 depicts a lightning arrester. These components are attached to bus bars 10 free of detachment via automatically couplable disconnecting switch units 31. The load unit 11 which is a major unit in the switchboard units 3 is constituted by the circuit breaker 9 connected via the automatically couplable disconnecting switch units 31, a current transformer 12, a zero phase current transformer 13 and a cable head 14 leading to the outside. Further, the bus bar unit 2 is provided in common for the arrayed switchboard units 3.

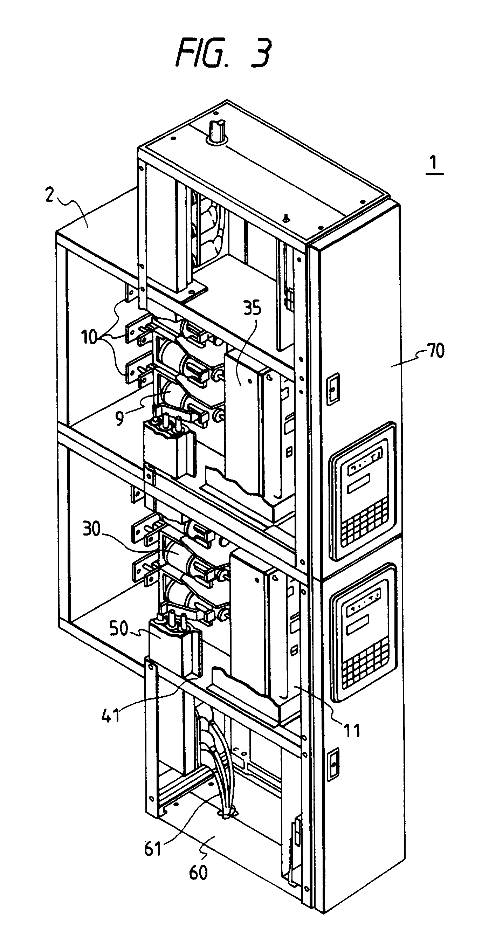

Fig.3 illustrates an arrangement of electrical equipments in the load unit 11 as an important unit, and the bus bar unit 2, which is explained above, the switchboard unit 3 and the bus bar unit 2 are attached to each other while permitting detachment therebetween. In the bus bar unit 2 three phase bus bars 10 extending in horizontal direction are attached. The load unit 11 is divided into two compartments 41 and 60. In the compartment 41, the circuit breakers 9 for the three phases are aligned in the horizontal direction and disposed in the vertical direction, which constitute a circuit breaker unit 30. The plane defined by the three phase bus bars 10 is arranged to cross perpendicularly to the plane defined by the circuit breaker unit 30. Further, the circuit breakers 9 and the bus bars 10 are directly connected to each other while permitting disconnection via connecting pieces secured to the circuit breakers 9 without using connecting conductors which will be explained in detail later. In the compartment 60, load cables 61 are disposed. Through the compartment 41 and 60 an insulated conductor 50 is provided. The insulated conductor 50 is formed by molding with a resin the three phase conductors connected to the load cables and is arranged to extend in the vertical direction. The circuit breakers 9 and the insulated conductor 50 are directly connected to each other while permitting disconnection via connecting pieces secured to the circuit breakers 9 without using connecting conductors which will be explained in detail later. The load cables electrically connected to the insulated conductor 50 are led out from the top of the switchboard 1 for the upper switchboard unit 3 and from the bottom thereof for the lower switchboard unit 3.

According to the present embodiment, the laterally arranged circuit breakers 9 are disposed in the vertical direction so that the width of the switchboard 1 is reduced, and further, since the bus bars 10 and the circuit breakers 9 are directly connected while permitting disconnection via the contacting pieces without using connecting conductors, the depth of the switchboard is also reduced. Still further, since the switchboard units 3 are attached to he bus bar unit 2 while permitting detachment of their internal electrical equipments such as the circuit breakers 9 and the bus bars 10 are connected while permitting disconnection thereof, an extremely smooth application of the switchboard after the installation thereof is achieved. For example, when a modification of current interrupting capacity of the circuit breakers 9 is required because of increase of the load, the required modification can be performed by removing the corresponding switchboard unit 3 together with the internal electrical equipments while maintaining the operation of the other switchboard units 3 and the bus bar unit 2. Further, as the switchboard 1 is constituted by units, the required modification is completed only by attaching a new switchboard unit 3 accommodating the electrical equipments having the required capacity. Still further, the bus bars 10 and the circuit breakers 9 are directly connected while permitting disconnection thereof via the contacting pieces without using connecting conductors. When it is required to modify the capacity of the circuit breakers 9 because of increase of the load, the modification can be performed while maintaining the circuit breakers 9 in the other units and the bus bars 10 in conductive state. On the other hand, in the conventional switchboard having the bus bars and the circuit breakers connected via the connecting conductors, connecting conductors are usually not designed to fully withstand the changed conducting current of the circuit breakers so that the connecting conductors have to be modified at the same time with the modification of the circuit breakers and the current supply to the bus bars has to be interrupted accordingly.

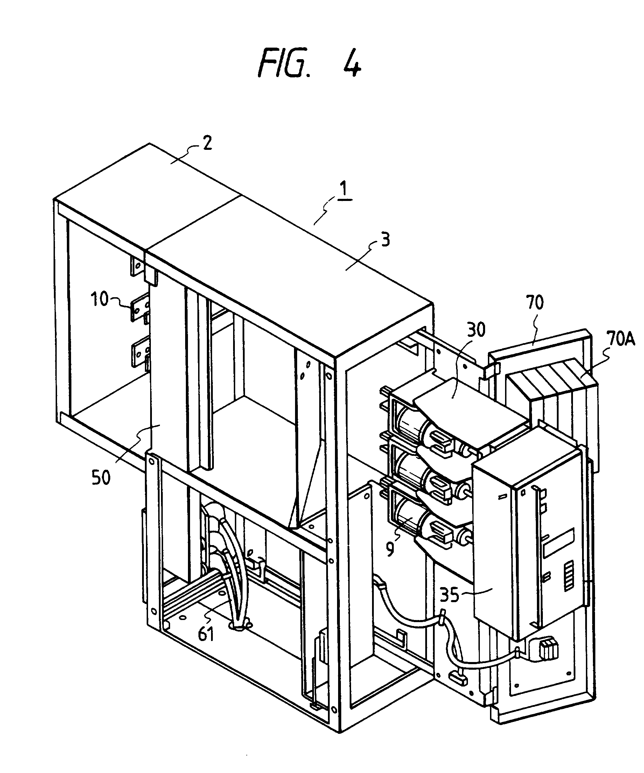

Fig.4 shows a perspective view of the lower side switchboard unit 3 and the bus bar unit 2 attached thereto illustrating the internal structure thereof when the door of the switchboard unit 3 is opened and the circuit breakers 9 therein are drawn out.

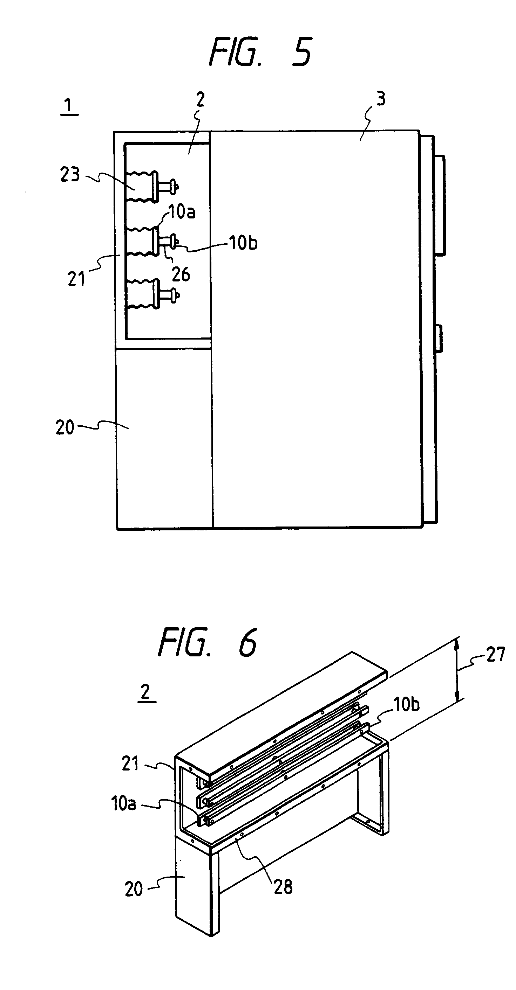

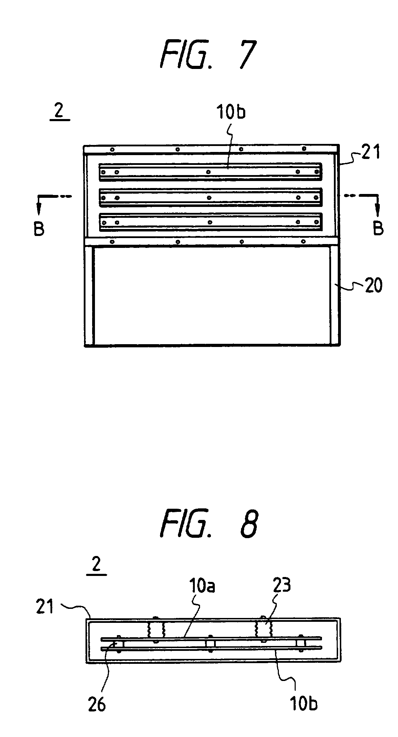

Fig.5 illustrates a cross section of the internal constitution of the lower bus bar unit 2 taken along the line A-A of the switchboard 1 shown in Fig.1. Fig.6 is a perspective view of the bus bar unit 2. Fig.7 is a front view of the bus bar unit 2. Fig.8 is a cross section taken along the line B-B in Fig.7. The bus bar unit 2 is completed by attaching a bus bar casing 21 to the lower supporting stand 20. Both ends of the bus bar casing 21 are bented so as to constitute an opening portion 27 facing toward the switchboard unit 3 which is necessary for moving the electrical equipments. At these bent portions holes 28 are provided which are used to attach the switchboard units 3. Double bus bars 10a and 10b are attached to the bus bar casing 21 via post insulators 23. The double bus bars 10a and 10b are provided which both extend in horizontal direction and current branching pieces 26 are provided between the bus bars 10a and 10b. The constitution of the double bus bars and the current branching pieces connected therebetween is an important feature of the present invention, of which functions and advantages will be explained later.

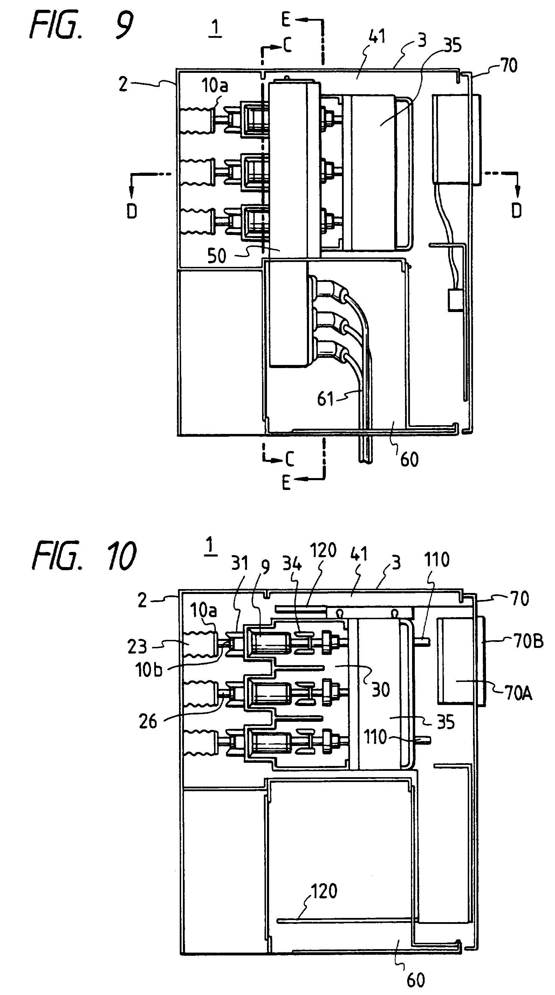

Fig.9 is a cross section illustrating an internal constitution of the lower switchboard unit 3 taken along the line A-A in Fig.1, the switchboard unit 3 is attached to the bus bar unit 2 by bolts passing through the holes 28 at the cross sectional plane along the line C-C while permitting detachment therebetween. The insulated conductor 50 is provided at this side of Fig.9 while passing through the compartment 41 and the compartment 60 in the vertical direction. The insulated conductor 50 is provided with the three phase conductors therein and molded with a resin. One end of each of the three phase conductors is connected to one each of the load cables 61 in the compartment 60 while permitting disconnection therebetween. The other ends of the three phase conductors in the insulated conductor 50 are directly connected to the circuit breakers 9 in the compartment 41 while permitting disconnection therebetween, which arrangement will be explained later.

Fig.10 is a view illustrating a connection state between the circuit breakers 9 and bus bars 10. In the drawing the insulated conductor 50 is removed from the cross sectional view shown in Fig.8.

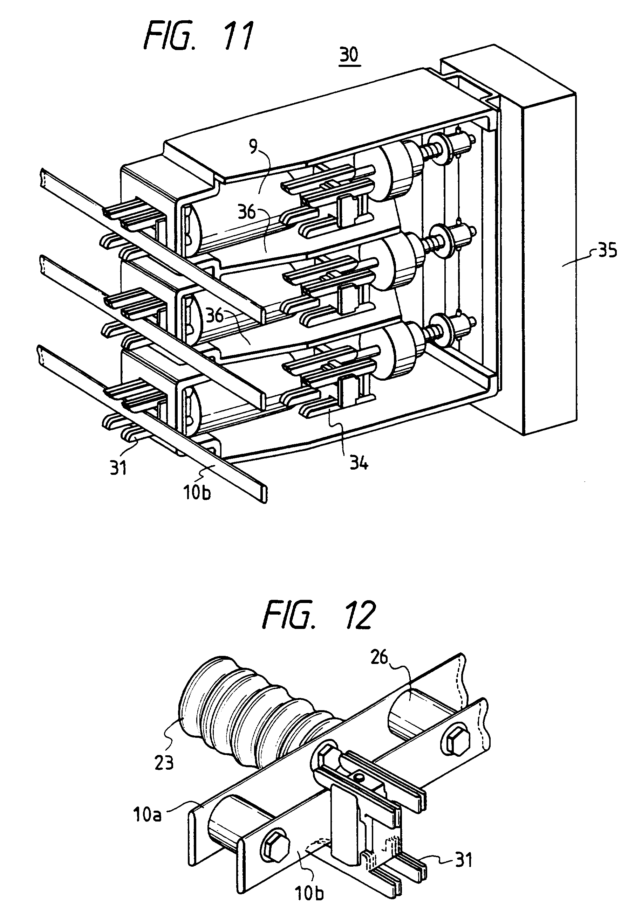

Fig.11 is a perspective view of the circuit breaker unit 30 which is installed in the compartment 41. The circuit breaker unit 30 is constituted by laterally arranged, for example, vacuum circuit breakers 9 which are disposed in the vertical direction. Further, in the drawing, vacuum circuit breakers 9 are exemplified, while circuit breakers using other operating principles can be used instead. Numeral 35 depicts a driving mechanism for the circuit breaker contacts. The opening and closing direction of the circuit breaker contacts being in the axis line of the circuit breaker 9 is determined to be in horizontal direction. A contacting member 31 for the bus bar side is provided at the top end portion of the stationary contact side of the circuit breaker 9. Further, a contacting member 34 for the insulated conductor 50 which is connected with a terminal from the movable contact side of the circuit breaker 9 is provided at the side of the circuit breaker 9. Still further, numeral 36 depicts a barrier isolating wall partitioning between the circuit breakers 9 for insulation purpose.

Further, Fig.12 illustrates a perspective view of the connecting state between the circuit breaker 9 and the bus bars 10. The contacting member 31 is directly connected to one of the double bus bars 10b without using connecting conductors while permitting disconnection therebetween. During a normal operating condition or in case of an accident a large current flows from the bus bars 10a and 10b to the load cables 61 via the circuit breakers 9. For reducing the size of the switchboard 1 under these conditions, it is important to suppress heat generation from the electrical equipments or conductors and to dissipate the generated heat as soon as possible. In the present embodiment, the heat generation from the conductors is reduced by introducing the direct connection between the bus bars 10b and the circuit breakers 9 while permitting disconnection therebetween, and further by introducing the double bus bars 10a and 10b, the heat dissipation is performed smoothly. Namely, since the current in the switchboard 1 flows from the bus bar 10a in a divided manner to the circuit breaker 9 via a plurality of connecting pieces 26 and the bus bar 10b and the respective divided current components are small, the amount of heat generation is decreased, and further, since the exposed surface area of the bus bars 10 is increased, the heat dissipation is smoothly carried out.

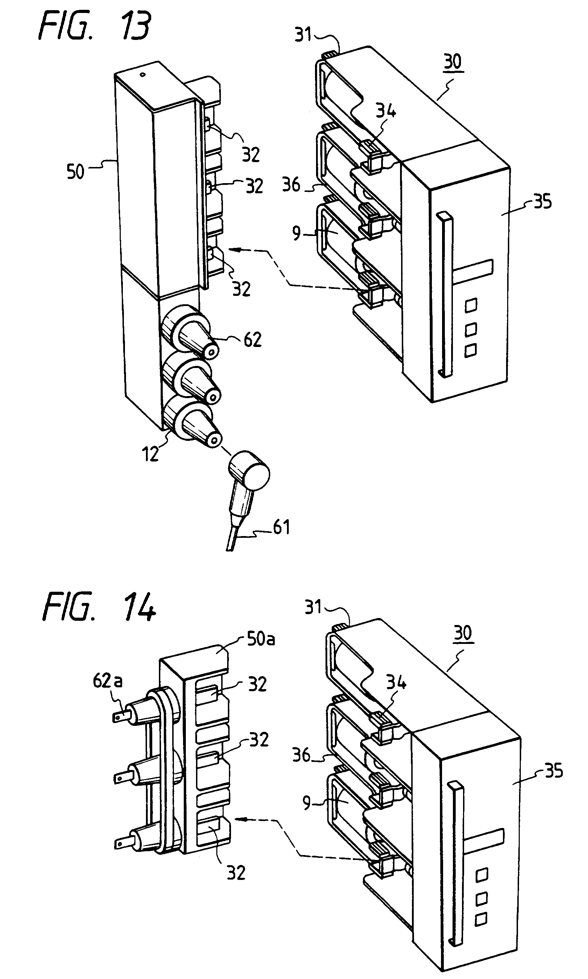

Fig.13 is a perspective view illustrating a connection state between the circuit breaker unit 30 and the insulated conductor 50. The current transformer 12 is provided at the bottom portion of the insulated conductor 50 and the cable heads 61 are to be fitted to the cable head mounting portions 62. On the other hand, at the other ends of the insulated conductor 50 circuit breaker connection portions 32 are provided to which the contacting members 34 for the load side of the circuit breakers 9 are connected.

Fig.14 illustrates a modified insulated conductor 50a wherein the cable heads 62a are led out in horizontal direction so that the length of leading out conductors is reduced.

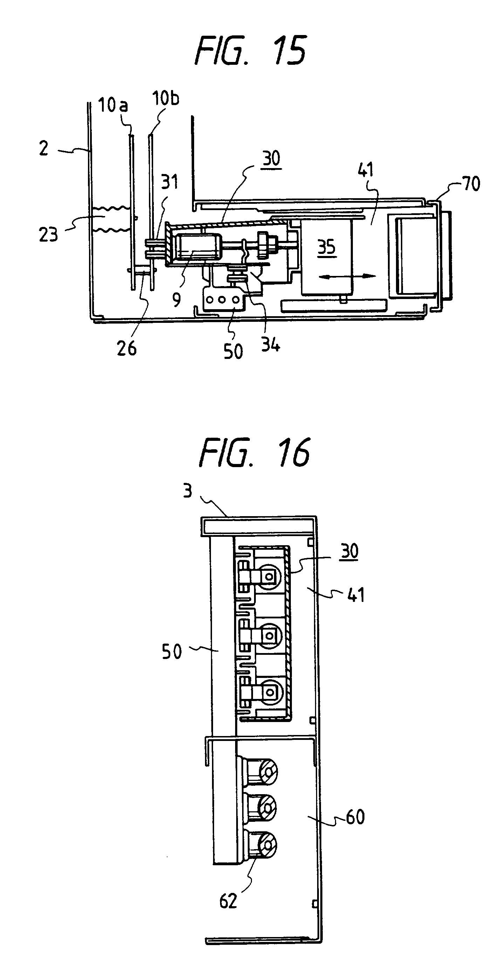

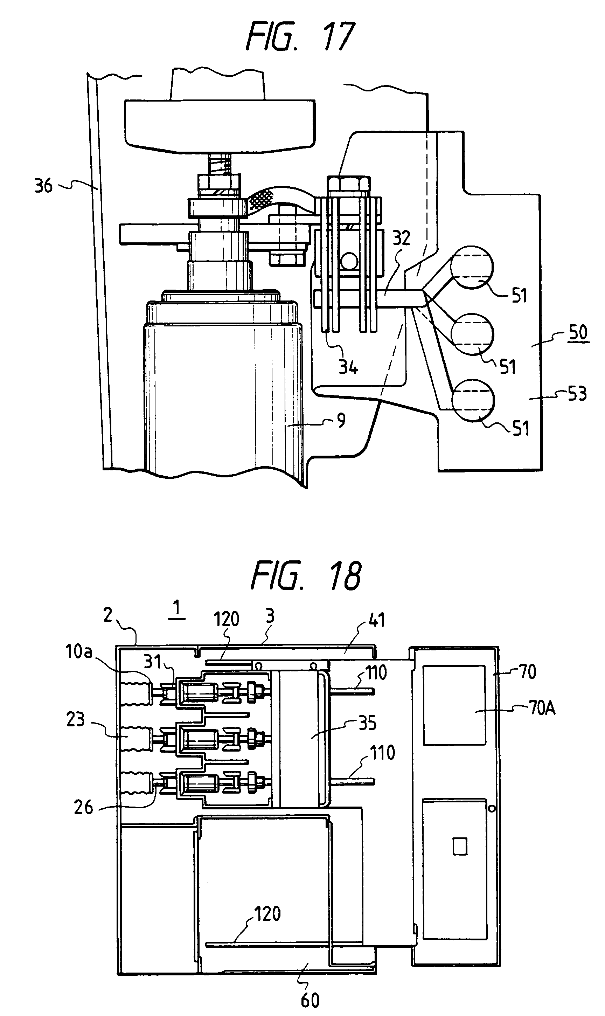

Fig.15 and Fig.16 are respectively views illustrating connecting states of the respective electrical equipments taken along the lines D-D and E-E in Fig.8. As seen from Fig.15, the circuit breaker unit 30 is disposed while permitting movement in the arrowed direction and in the connecting state the contacting members 31 and 34 are directly connected respectively to the bus bar 10b and the insulated conductor 50 while permitting disconnection therebetween. Fig.17 is an enlarged view showing the connecting state between the circuit breaker 9 and the insulated conductor 50. In the drawing, the insulated conductor 50 includes an insulating layer 53 formed by molding with an insulating material the three phase conductors 51 and the contacting pieces 32 for the load side. The contacting pieces 32 are disposed at the locations where the respective contacting pieces 34 for the circuit breakers 9 can make contact. One end of each of the respective contacting pieces 32 is connected to one each of the three phase vertical conductors 51. The respective three phase vertical conductors 51 are arranged in the moving direction of the circuit breaker 9 with a predetermined interval in the depth direction, so as to reduce the width size of the switchboard. When connecting the three phase load side contacting pieces 32 with the three phase vertical conductors 51, at least two phase load side contacting pieces 32 are bent toward the moving direction of the circuit breaker 9 with a small inclination angle and the respective load side contacting pieces 32 are led out from the same leading out plane but different in height. The end terminals of the vertical conductors 51 extend into the load cable chamber 60, and are molded integrally with a resin and connected to the load cables 61.

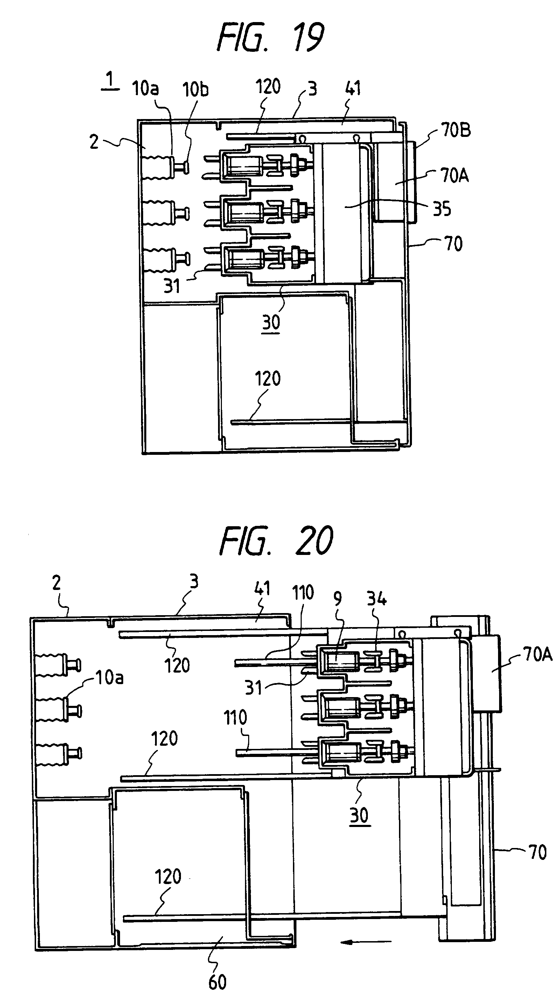

Fig.10 explained above illustrates the connecting state between the circuit breakers 9 and the bus bars 10a, in that operating position, while Fig.19 illustrates a drawn out state, that is the disconnecting position, of the circuit breakers 9 toward the front of the switchboard. Fig.18 illustrates a state wherein the door 70 of the switchboard 1 is opened while the circuit breakers 9 are in the connecting condition and Fig.20 illustrates a state wherein the circuit breaker unit 30 is drawn out along guide rails 110 and 120. According to the present embodiment, the volume of the switchboard 1 is greatly reduced, so that one might assume that inspections, repairs and the like in the switchboard 1 are rendered difficult. However, as illustrated in Fig.20, it is possible to fully draw out the circuit breaker unit 30 from the switchboard unit 3 and further, the switchboard unit 3 itself can be separated from the bus bar unit 2, so that the above presumed difficulty is fully resolved.

The switchboard 1 constituted as explained above according to the present invention has the following functions and advantages.

As will be apparent from the above, the switchboard 1 according to the present embodiment is divided into the bus bar side unit casing 2 and the circuit breaker side unit casing 3, and the adjacent faces of the bus bar side unit casing 2 and the circuit breaker side unit casing 3 are opened toward each other. Therefore, working such as attaching the electrical equipments and removing thereof in both casings is carried out easily, for example, from their opening portions. Thus, the time for assembly and disassembly work of the switchboard 1 and the electrical components in the switchboard 1 is extremely reduced.

Further, when an accident occurs, for example, at the circuit breaker side unit casing 3 in one of the arrayed switchboard unit casings and the exchange thereof is required, the exchange is carried out in such a manner that the circuit breaker side unit casing 3 has suffered by the accident is drawn out from the bus bar side unit casing 2. Then a new circuit breaker side unit casing 3 is inserted thereinto so that the time for the exchange work is greatly reduced in comparison with the conventional way wherein the entire switchboard is exchanged.

Still further, when carrying out the unit casing exchange, the other switchboard unit casing next to the removed switchboard unit can be shifted to the position where the removed switchboard unit casing was located and thereafter a new switchboard unit casing is placed, for example, at the right end of the bus bars to complete arrayed switchboard unit casings. The movement of the arrayed switchboard unit casings prevent the disconnecting switch units 31 for the power source side from contacting the same portions of the lateral bus bars 10 and effects uniform use of the portions of the lateral bus bars 10 to thereby eliminate the wear of the lateral bus bars 10.

The circuit breaking portions of the circuit breakers 9 are arranged in horizontal direction and further, the circuit breakers 9 are piled up in three tiers in the vertical direction, thereby the size in the width direction of the switchboard is reduced. As a result, the depth due to the circuit breakers 9 is elongated, however by arranging the contacting members for the power source side, which are directly connected to the bus bars 10b while permitting disconnection therebetween, perpendicularly with respect to the bus bars 10b, branching conductors and insulator molded disconnecting switch units in the conventional switchboard are eliminated, thereby the depth as a whole is reduced. Accordingly, the volume of the switchboard 1 is greatly reduced. Further, since the three phase vertical conductors 51 in the insulated conductor 50 are disposed along the moving direction of the circuit breakers 9 with a predetermined interval, the width of the insulated conductor 50 is narrowed with respect to the depth, and accordingly the width of the switchboard 1 is reduced, thereby the volume of the switchboard 1 is further reduced. More specifically, according to the present embodiment, the height of the switchboard is 2.3m as in the conventional one, however the depth and width thereof are respectively reduced upto 0.9 and 0.3m, so that the volume thereof is reduced to 1/5 of the conventional one.

Further, in the present embodiment, the power source side contacting members 31 for the circuit breakers 9 are designed to be directly connected to the double bus bars 10 while permitting disconnection therefrom. Accordingly, the current from the bus bar 10a flows via the branching portions 26 and the connecting bus bar 10b to the circuit breakers 9, thereby the heat generation due to the current is reduced which greatly contributes to the volume reduction of the switchboard 1. In other words, when the same amount of current as in the conventional one is required to be flown in the respective branching portions 26 of the double bus bars 10, the current carrying capacity of the circuit breakers 9 can be doubled. Accordingly, with the present embodiment, switchboards having capacities from small to large can be easily constituted in units.

Further, according to the present embodiment, the switchboard 1 is constituted by a plurality of switchboard units 3 and a common bus bar unit 2, and the switchboard units 3 are arranged in an array. Further, the switchboard units 3 are attached to the common bus bar unit 2 while permitting detachment thereof. As a result, the modification of the switchboard 1 is facilitated when the required load is increased and further, since the switchboard 1 is constituted in units, the design of the switchboard 1 by combining the units is also facilitated.

Further, hereinbelow some modifications of the present embodiment are explained. As indicated above, with the present embodiment, the volume of the switchboard 1 is reduced to 1/5 of the conventional one, however the volume reduction ratio can be varied to an appropriate degree by making use of the idea of the present embodiment.

In the present embodiment, the circuit breakers 9 are laterally laid down and the circuit breakers 9 for the three phases are pile up in the vertical direction, however the three circuit breakers 9 are not necessarily piled up in the same plane. Some of the circuit breakers 9 may be disposed away from the plane in horizontal direction. In some instances, it is even preferable to dispose the circuit breakers 9 so as to permit movement in horizontal direction. In the present embodiment, the power source side contacting members 31 contact to the horizontal bus bars 10. However, when the contacting condition at those portions are deteriorated, and if the contacting positions are shiftable in the horizontal direction, the deteriorated contacting condition can be avoided. Further, the load side contacting members 34 can be disposed so as to permit slight movement in horizontal direction in the same manner as in the power source side contacting members 31.

Further, in the present embodiment the bus bars 10 are extended in horizontal direction and the three phase bus bars 10 are disposed in the same vertical plane, however these bus bars 10 are not necessarily disposed in the same vertical plane and some of the bus bars 10 may be offset to the depth direction. Still further, the bus bars need not to be connected directly to the circuit breakers while permitting disconnection therefrom, but both can be connected via short connecting conductors having a large current carrying capacity.

Still further, in the present embodiment, the switchboard units 3 are attached to the bus bar unit 2 while permitting detachment therefrom, alternatively, the switchboard units 3 may be fixed and the bus bar unit 2 may be detachably attached to the switchboard units 3.

Moreover, for other electrical equipments such as the grounding instrument use transformer, the instrument use transformer and the lightning arrester in the switchboard units, the respective contacting members can be provided in the same manner as for the circuit breakers in order to connect the same directly to the bus bars while permitting disconnection therefrom.

In the present embodiment, the contacting pieces 31 are provided at the circuit breaker side, however the same can be provided at the bus bar side and further the configuration of the contact pieces 31 is not limited to that disclosed.

Now, the operation of the guide rails 110 and 120 provided on the inner side face of the switchboard unit casing 3 are explained.

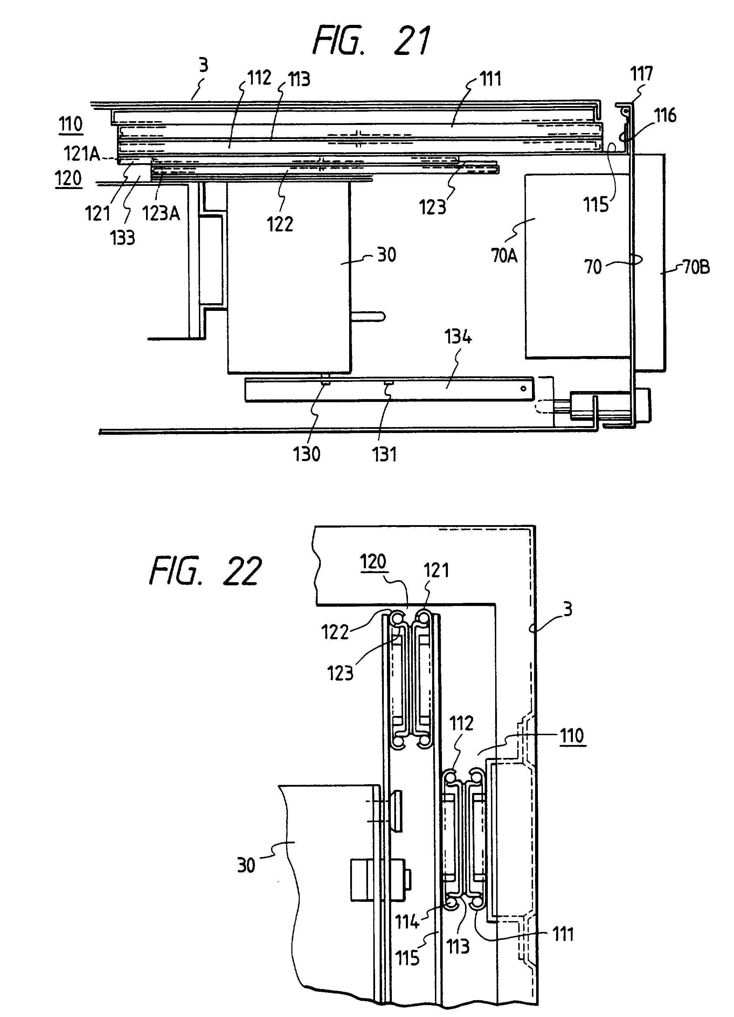

The detailed structure of the guide rail 110 is explained with reference to Fig.21 through Fig.24. Further, the guide rails 110 and 120 are respectively provided at at least two positions on the side face of the switchboard unit casing 3.

In the first guide rail 110, between a first stationary rail 111 and a first moving rail 112 a first intermediate rail 113 is disposed. The first stationary rail 111 is fixed on the side face of the switchboard unit casing 3 and the first intermediate rail 113 is provided with roll bearings 114 at the up and down positions thereof.

From the both ends of the first stationary rail 111 first stationary stoppers 111A and 111B extend toward the first intermediate rail 113. On one side face of the first intermediate rail 113 first intermediate stoppers 113A and 113B are provided which engage with the first stationary stoppers 111A and 111B, and on the other side face first intermediate stopper 113C and 113D are provided which extend toward the first moving rail 112. The first moving rail 112 is provided with first moving stoppers 112A and 112B which engage with the first intermediate stoppers 113C and 113D.

When the first intermediate rail 113 moves along the first stationary rail 111 and stops when the first stationary stopper 111B engages with the first intermediate stopper 113B, the first moving rail 112 further moves along the first intermediate rail 113 and stops when the first intermediate stopper 113C engages the first moving stopper 112A so that the distance covered by the first guide rail 110 can be extended. When returning the first moving rail 112 and the first intermediate rail 113 to their original positions, the reverse operation to that explained above is performed and the remaining stoppers not used in the above operation are used for the reverse operation.

The other face of the first moving rail 112 opposite to the face on which the first moving stoppers 112A and 112B are provided is fixed to a supporting plate 115. On the supporting plate 115 the second guide rail 120 is attached and further at the top end portion 116 of the supporting plate 115, which is bended toward the first guide rail 110, the swingable door 70 is attached via hinge 117. On the front and back of the door 70 instruments 70A and a handle 70B are provided.

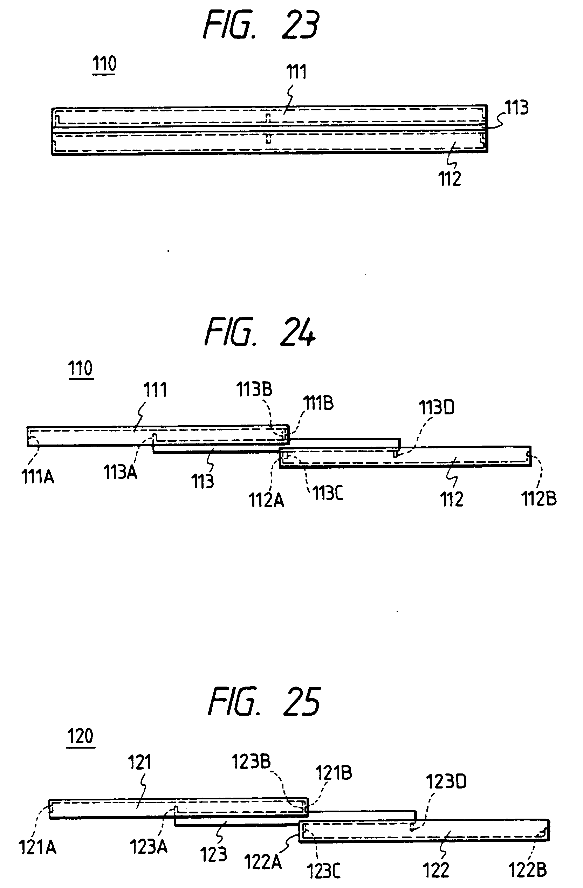

The second guide rails 120 are provided on the supporting plate 115 at two locations, however in the same manner as above, the second guide rail 120 provided at one location. Since the structure of the second guide rail 120 is substantially the same as that of the first guide rail 110, only the different points are explained with reference to Fig.25. In the second guide rail 120, a second intermediate rail 123 is disposed between a second moving rail 121 and a third moving rail 122. The second moving rail 121 is fixed to the supporting plate 115. The third moving rail 122 carries the circuit breaker unit 30.

Second moving stoppers 121A and 121B extend from both ends of the second stationary rail 121 toward the second intermediate rail 123. On one side face of the second intermediate rail 123 second intermediate stoppers 123A and 123B are provided which engage with the second moving stoppers 121A and 121B, and on the other side face thereof second intermediate stoppers 123C and 123D are provided which extend toward the third moving rail 122. The third moving rail 122 is provided with second moving stoppers 122A and 122B which engage with the second intermediate stoppers 123C and 123D. The operation of the these rails 121, 122 and 123 is the same as that in the first guide rail 110, so that the explanation thereof is omitted.

Now, the function of the first guide rail 110 and the second guide rail 120 is explained.

At the operating position 130 of the circuit breaker unit 30 illustrated in Fig.10 and Fig.21, the left ends 133 of the third moving rail 122 and the second intermediate rail 123 are disposed offset from the end of the second moving rail 121.

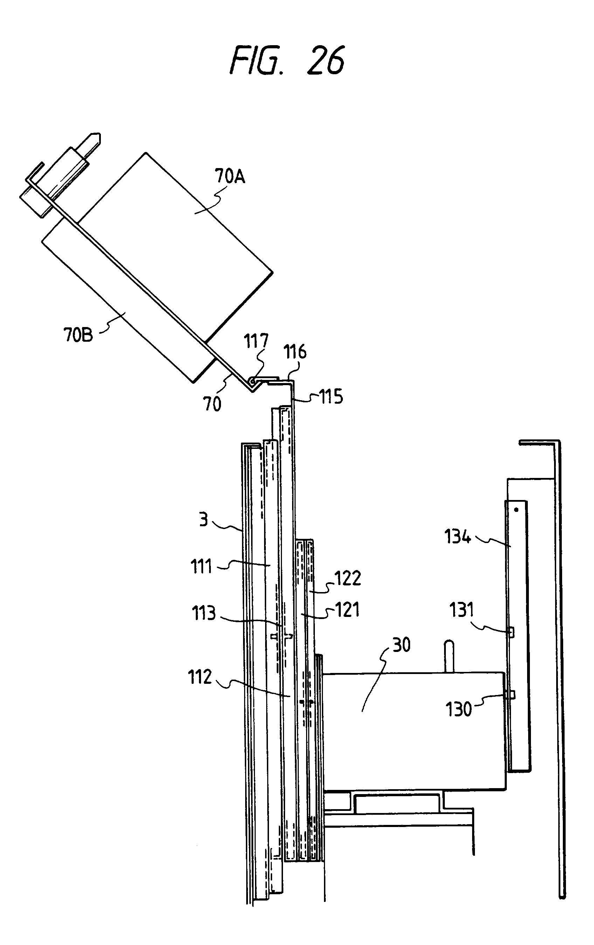

When moving the circuit breaker unit 30 from this operating position 130 to the disconnecting position 131, a craftsman grips the handle 70B and pulls the door 70, so that the second moving rail 121 moves along the second intermediate rail 123 by the offset distance of the left end 133 and the second moving stopper 121A engages with the intermediate stopper 123A to stop the movement of the second moving rail 121. The door 70 moves outside the switchboard unit casing 3 as illustrated in Fig.18 and Fig.26. At this instance, the door 70 moves by the offset distance of the left end 133, therefore a hitting of the instruments 70A against a position plate 34 is avoided.

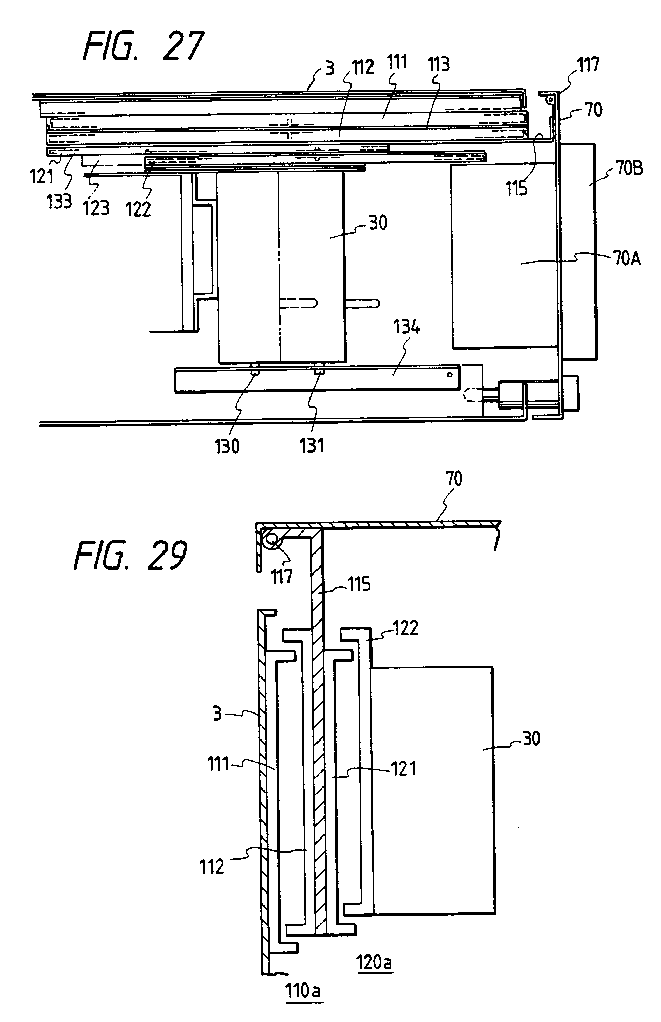

In this condition, when the circuit breaker unit 30 moves from the operating position 130 to the disconnecting position 131 and the door 70 is closed, the switchboard unit takes a state as illustrated in Fig.19 and Fig.27. Namely, even if the door 70 is closed, the circuit breaker unit 30 is maintained in the disconnecting position 131. Therefore, when a craftman performs a maintenance and inspection over the load side cable 61 outside the switchboard casing, the circuit breaker unit 30 serves as a shutter thereby to prevent the craftsman from touching the power source side bus bars 10.

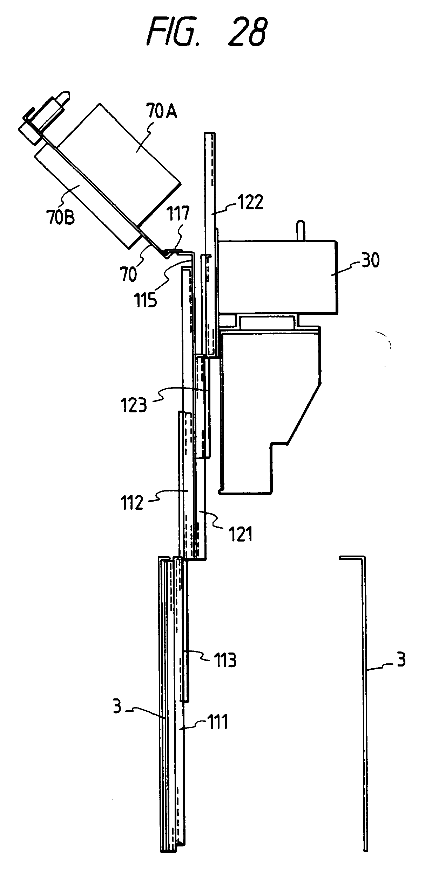

Further, in order to draw out the circuit breaker unit 30 outside the switchboard as illustrated in Fig.20 and Fig.28 from the disconnecting position 131 illustrated in Fig.19 and Fig.27, the door 70 is moved by the offset distance of the left end 133 as illustrated in Fig.27 to the position illustrated in Fig.26. At this position, when the first moving rail 112 and the first intermediate rail 113 are drawn out toward the outside direction of the switchboard until the first intermediate stopper 113B engages with the first stationary stopper 111B, the first intermediate rail 113 extends outside from the first stationary rail 111.

Further, when moving the first moving rail 112 to the outside along the first intermediate rail 113 until the first moving stopper 112A engages with the first intermediate stopper 113C, the first moving rail 112 and the supporting plate 115 move outside from the first intermediate rail 113.

When moving the second intermediate rail 123 along the second moving rail 121 on the supporting plate 115 and further moving the third moving rail 122 along the second intermediate rail 123, the circuit breaker unit 30 and the door 70 move outside the switchboard as illustrated in Fig.20 and Fig.28. At this position, the circuit breaker unit 30 and the door 70 are drawn out to the outside to thereby facilitate the maintenance and inspection work thereof. Namely, according to the present embodiment, from the position where the first guide rail 110 and the supporting plate 115 altogether move and extend, the second guide rail 20 provided on the supporting plate 115 further extends outside the switchboard, and the circuit breaker unit 30 and the door 70 are fully drawn out to the outside of the switchboard thereby to facilitate the maintenance and inspection work thereof.

Further, in order to return the circuit breaker unit 30 drawn out from the switchboard into the inside thereof, it is sufficient to move the first guide rail 110 and the second guide rail 120 in the revers direction as that explained above, so that the explanation thereon is omitted.

Fig.29 is another embodiment wherein the respective intermediate rails are omitted from between the first stationary rail 111 and the first rail 112 and from between the second moving rail 121 and the third moving rail 122. However the modified embodiment achieves substantially the same functions and advantages as the embodiment as explained above.

## Claims

1. A switchboard (1) comprising
a common bus bar casing (2) accommodating a plurality of bus bars (10) for connection to a power source and extending horizontally with a mutual vertical spacing,
a plurality of switchboard unit casings (3) which are detachably connected to said bus bar casing (2) and each accommodate an electrical equipment (9, 15...17), at least one switchboard casing including a plurality of circuit breakers (9) and a plurality of load side conductors (51) for connection to load side cables (61), and
guide rails (110, 120) carrying at least one said electrical equipment (9).
**characterised** in
that first disconnecting switch units (31) are connected between said bus bars (10) and circuit breakers (9) and second disconnecting switch units (34) are connected between said circuit breakers (9) and load side conductors (51),
that said circuit breakers (9) are disposed with a mutual vertical spacing with their contact moving axes extending horizontally in the depth direction of the switchboard unit casings (3) and perpendicularly to the direction in which said bus bars (10) extend, and
that said load side conductors (51) extend vertically and perpendicularly to the moving direction of said circuit breakers (9).

2. The switchboard of claim 1, characterized in that each of said bus bars (10) is constituted by a first bus bar (10a), a second bus bar (10b) extending parallel to said first bus bar (10a) and spaced apart in the depth direction of the switchboard unit casings (3), and a plurality of conductors (26) interconnecting said first and second bus bars (10a, 10b), and that said first disconnecting switch units (31) are connected to the second bus bar (10b) at positions between said interconnecting conductors (26).

3. The switchboard of claim 1 or 2, characterized in that said circuit breakers are a vacuum circuit breakers (9).

4. The switchboard of any preceding claim, characterized in that said load side conductors (51) are mutually spaced in the depth direction of the switchboard unit casings (3).

5. The switchboard of any preceding claim, characterized in that an insulator barrier (36) is disposed between adjacent circuit breakers (9).

6. The switchboard of any preceding claim, characterized in that said second disconnecting switch units (34) are disposed at the sides of said circuit breakers (9).

7. The switchboard of any preceding claim, characterized in that at least one electrical equipment (30) is carried by a guide rail (110, 120) constituted by a stationary rail (111) secured on an inner side face of the respective switchboard unit casing (3), a first movable rail (112) movable along said stationary rail (111), a supporting plate (115) carrying a swingable door (70) of said switchboard unit casing (3) secured to said first movable rail (112), a second movable rail (121) secured to said supporting plate (115), and a third movable rail (122) carrying said electrical equipment (30) and being movable along said second movable rail (121).

8. The switchboard of claim 7, further characterized in that a first intermediate rail (113) is provided between said stationary rail (111) and said first movable rail (112), and a second intermediate rail (123) is provided between said second movable rail (121) and said third movable rail (122).

## Patentansprüche

1. Schalttafel (1) umfassend
ein gemeinsames Sammelschienengehäuse (2), in dem mehrere Sammelschienen (10) zum Anschluß an eine Stromquelle untergebracht sind, wobei die Sammelschienen horizontal und mit vertikalem Abstand voneinander verlaufen,
mehrere Schalttafeleinheiten-Gehäuse (3), die mit dem Sammelschienengehäuse (2) lösbar verbunden sind und in deren jedem ein elektrisches Gerät (9, 15...17) untergebracht ist, wobei mindestens ein Schalttafeleinheiten-Gehäuse mehrere Stromkreisunterbrecher (9) und mehrere lastseitige Leiter (51) zum Anschluß an lastseitige Kabel (61) enthält, und
mindestens eines der elektrischen Geräte (9) tragende Führungsschienen (110, 120),
dadurch **gekennzeichnet**,
daß zwischen den Sammelschienen (10) und den Stromkreisunterbrechern (9) erste Trennschaltereinheiten (31) und zwischen den Stromkreisunterbrechern (9) und den lastseitigen Leitern (15) zweite Trennschaltereinheiten (34) angeschlossen sind,
daß die Stromkreisunterbrecher (9) in vertikalem Abstand voneinander angeordnet und ihre Kontaktbewegungsachsen in Richtung der Tiefe der Schalttafeleinheiten-Gehäuse (3) und senkrecht zu der Richtung verlaufen, in der die Sammelschienen (10) verlaufen, und
daß die lastseitigen Leiter (51) vertikal und senkrecht zur Bewegungsrichtung der Stromkreisunterbrecher (9) verlaufen.

2. Schalttafel nach Anspruch 1, dadurch gekennzeichnet, daß jede der Sammelschienen (10) von einer ersten Sammelschiene (10a), einer parallel zu dieser und in Richtung der Tiefe der Schalttafeleinheiten-Gehäuse (3) in Abstand angeordneten zweiten Sammelschiene (10b) und mehreren die beiden Sammelschienen (10a, 10b) verbindenden Leitern (26) gebildet ist, und daß die ersten Trennschaltereinheiten (31) an die zweiten Sammelschiene (10b) an Stellen zwischen den verbindenden Leitern (26) angeschlossen sind.

3. Schalttafel nach Anspruch 1 oder 2, dadurch gekennzeichnet, daß die Stromkreisunterbrecher Vakuumschalter (9) sind.

4. Schalttafel nach einem der vorhergehenden Ansprüche, dadurch gekennzeichnet, daß die lastseitigen Leiter (51) in Richtung der Tiefe der Schalttafeleinheiten-Gehäuse (3) in Abstand voneinander angeordnet sind.

5. Schalttafel nach einem der vorhergehenden Ansprüche, dadurch gekennzeichnet, daß zwischen benachbarten Stromkreisunterbrechern (9) ein isolierendes Trennelement (36) angeordnet ist.

6. Schalttafel nach einem der vorhergehenden Ansprüche, dadurch gekennzeichnet, daß die zweiten Trennschaltereinheiten (34) an den Seiten der Stromkreisunterbrecher (9) angeordnet sind.

7. Schalttafel nach einem der vorhergehenden Ansprüche, dadurch gekennzeichnet, daß mindestens ein elektrisches Gerät (30) an einer Führungsschiene (110, 120) aufgehängt ist, die von einer an einer inneren Seitenfläche des betreffenden Schalttafeleinheiten-Gehäuses (3) befestigten stationären Schiene (111), einer längs dieser bewegbaren ersten Schiene (112), einer daran befestigten, eine Schwingtür (70) des Schalttafeleinheiten-Gehäuses (3) tragenden Stützplatte (115), einer an dieser befestigten zweiten bewegbaren Schiene (121), und einer das elektrische Gerät (30) tragenden, längs der zweiten bewegbaren Schiene (121) bewegbaren dritten Schiene (122) gebildet ist.

8. Schalttafel nach Anspruch 7, dadurch gekennzeichnet, daß zwischen der stationären Schiene (111) und der ersten bewegbaren Schiene (112) eine erste Zwischenschiene (113) und zwischen der zweiten bewegbaren Schiene (121) und der dritten bewegbaren Schiene (122) eine zweite Zwischenschiene (123) angeordnet ist.

## Revendications

1. Panneau de distribution (1) comprenant
un coffret commun (2) pour barres omnibus, logeant une pluralité de barres omnibus (10) destinées à être raccordées à une source d'alimentation et s'étendant horizontalement en étant mutuellement séparées verticalement,
une pluralité de coffrets unités (3) de panneau de distribution, qui sont connectés de façon amovible audit coffret (2) pour barres omnibus et dont chacun loge un équipement électrique (9,15...17), au moins un coffret de panneau de distribution comprenant une pluralité de disjoncteurs (9) et une pluralité de conducteurs (51) situés côté charge pour le raccordement à des câbles (61) situés côté charge, et
des rails de guidage (110,120) portant au moins l'un desdits équipements électriques (9),
caractérisé en ce
que des premières unités formant sectionneurs (31) sont branchées entre lesdites barres omnibus (10) et lesdit disjoncteurs (9) et des secondes unités formant sectionneurs (34) sont branchées entre lesdits disjoncteurs (9) et lesdits conducteurs (15) situés côté charge,
que lesdits disjoncteurs (9) sont disposés en étant mutuellement espacés verticalement, les axes de déplacement de leurs contacts s'étendant horizontalement dans le sens de la profondeur des coffrets unités (3) de panneau de distribution et perpendiculairement à la direction desdites barres omnibus (10), et
que lesdits conducteurs (51) situés côté charge s'étendent verticalement et perpendiculairement à la direction de déplacement desdits disjoncteurs (9).

2. Panneau de distribution selon la revendication 1, caractérisé en ce que chacune desdites barres omnibus (10) est constituée par une première barre omnibus (10a), une seconde barre omnibus (10b) s'étendant parallèlement à ladite première barre omnibus (10a) en étant espacée, dans le sens de la profondeur des coffrets unités (3) de panneau de distribution, une pluralité de conducteurs (26) interconnectant lesdites première et seconde barres omnibus (10a, 10b), et que lesdites premières unités formant sectionneurs (31) sont connectées à la seconde barre omnibus (10b) dans des positions situées entre lesdits conducteurs d'interconnexion (26).

3. Panneau de distribution selon la revendication 1 ou 2, caractérisé en ce que lesdits disjoncteurs sont des disjoncteurs vides (9).

4. Panneau de distribution selon l'une quelconque des revendications précédentes, caractérisé en ce que lesdits conducteurs (51) situés côté charge sont mutuellement espacés dans le sens de la profondeur des coffrets unités (3) de panneau de distribution.

5. Panneau de distribution selon l'une quelconque des revendications précédentes, caractérisé en ce qu'une barrière isolante (36) est disposée entre des disjoncteurs voisins (9).

6. Panneau de distribution selon l'une quelconque des revendications précédentes, caractérisé en ce que lesdites secondes unités formant sectionneurs (34) sont disposées sur les côtés desdits disjoncteurs (9).

7. Panneau de distribution selon l'une quelconque des revendications précédentes, caractérisé en ce qu'au moins un équipement électrique (30) est porté par un rail de guidage (110,120) constitué par un rail fixe (111) fixé sur une face située sur le côté intérieur du coffret individuel respectif (3) de panneau de distribution, un premier rail mobile (112) déplaçable le long dudit rail fixe (111), une plaque de support (115) portant une porte pivotante (70) dudit coffret individuel (3) de panneau de distribution, fixée audit premier rail mobile (112),un second rail mobile (121) fixé à ladite plaque de support (115) et un troisième rail mobile (122) portant ledit équipement électrique (30) et étant déplaçable le long dudit second rail mobile (121).

8. Panneau de distribution selon la revendication 7, caractérisé en outre en ce qu'un premier rail intermédiaire (113) est prévu entre ledit rail fixe (111) et ledit premier rail mobile (112) et qu'un second rail intermédiaire (123) est prévu entre ledit second rail mobile (121) et ledit troisième rail mobile (122).
